(19) Europäisches Patentamt
European Patent Office
Office européen des brevets

(11) **EP 3 595 276 A1**

(12) **EUROPEAN PATENT APPLICATION**
published in accordance with Art. 153(4) EPC

(43) Date of publication:
**15.01.2020 Bulletin 2020/03**

(21) Application number: **17900053.4**

(22) Date of filing: **16.10.2017**

(51) Int Cl.:
*H04M 1/725* (2006.01)    *H04N 5/225* (2006.01)
*H04N 5/235* (2006.01)

(86) International application number:
**PCT/CN2017/106269**

(87) International publication number:
**WO 2018/161568 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.03.2017 CN 201710127372**

(71) Applicant: **ZTE Corporation**
**Shenzhen, Guangdong 518057 (CN)**

(72) Inventor: **LI, Jing**
**Shenzhen**
**Guangdong 518057 (CN)**

(74) Representative: **Lavoix**
**Bayerstrasse 83**
**80335 München (DE)**

(54) **PHOTOGRAPHING METHOD AND DEVICE BASED ON TWO CAMERAS**

(57)    Provided are a photographing method and device based on two cameras. The two cameras include a first camera and a second camera. The method includes: determining attribute information of the first camera that has been activated; determining a first ambient luminance value according to the attribute information; and determining whether to switch from the first camera to the second camera to perform photographing according to the first ambient luminance value.

```
Determine attribute information of the first camera that has been          S101
activated

Determine a first ambient luminance value according to the               S102
attribute information

Determine whether to switch from the first camera to the second          S103
camera to perform photographing according to the first ambient
luminance value
```

**FIG. 1**

EP 3 595 276 A1

**Description**

**TECHNICAL FIELD**

The present disclosure relates to camera techniques and, in particular, to a photographing method and device based on two cameras.

**BACKGROUND**

Currently, an intelligent terminal with a photographing function has become an indispensable device for people in their daily life and work. With the development of a manufacturing process, the thickness of a body of the intelligent terminal is thinner and thinner, a camera sensor serving as a main component of the terminal is smaller and smaller, and the resolution of a camera is higher and higher. On the limited photosensitive area of the camera sensor, higher and higher resolution causes a small photosensitive area of each pixel and poor performance of the camera in the dark.

In the existing technical solution, for the terminal with a single camera, its performance is not ideal in certain scenarios, and it cannot meet all scenarios. The rear-facing duel cameras have become a trend of intelligent terminal camera development. In the solution of the rear-facing duel cameras, the rear-facing duel cameras may use the same pixels, or may use different pixels. For the terminal with two cameras, the photographing effect of fixed cameras is the similar to the photographing effect of the single camera, and such a terminal cannot use different cameras according to the difference environmental scenarios. Thus, the photographing effect of the terminal in all scenarios cannot be guaranteed to be good.

**SUMMARY**

In order to solve the technical problem in the existing art, embodiments of the present disclosure provide a photographing method and device based on two cameras, which may automatically select a suitable camera according to the actual luminance of the external environment, thereby ensuring the good photographing effect in various scenarios.

To achieve the preceding object, solutions in the embodiments of the present disclosure are implemented as follows.

In a first embodiment, an embodiment of the present disclosure provides a photographing method based on two cameras. The two cameras include a first camera and a second camera.

The method includes: determining attribute information of a first camera that has been activated; determining a first ambient luminance value according to the attribute information; and determining whether to switch from the first camera to the second camera to perform photographing according to the first ambient luminance value.

In a second embodiment, an embodiment of the present disclosure provides a photographing device based on two cameras. The two cameras include a first camera and a second camera. The photographing device includes: a first determination module, which is configured to determine attribute information of the first camera that has been activated; a second determination module, which is configured to determine a first ambient luminance value according to the attribute information; and a third determination module, which is configured to determine whether to switch from the first camera to the second camera to perform photographing according to the first ambient luminance value.

The embodiments of the present disclosure provide a photographing method and device based on two cameras. The method includes: determining attribute information of the first camera that has been activated; determining a first ambient luminance value according to the attribute information; and determining whether to switch from the first camera to the second camera to perform photographing according to the first ambient luminance value. Therefore, a suitable camera may be selected automatically according to the actual luminance of the external environment, thereby ensuring the good photographing effect in various scenarios.

**BRIEF DESCRIPTION OF DRAWINGS**

In the drawings (which are not necessarily drawn to scale), similar reference numerals in the drawings may denote similar components in different diagrams. The similar reference numerals having different letter suffixes may denote different examples of the similar components. The drawings generally illustrate various embodiments discussed in the present disclosure by way of example and not by way of limitation.

FIG. 1 is a flowchart of a photographing method based on two cameras according to an embodiment 1 of the present disclosure.

FIG. 2 is a flowchart of a method for generating a correspondence table of an ambient luminance value and a luminance average value according to an embodiment 2 of the present disclosure.

FIG. 3 is a flowchart of a photographing method based on two cameras according to an embodiment 3 of the present disclosure.

FIG. 4 is a structure diagram of a photographing device based on two cameras according to an embodiment 4 of the present disclosure.

**DETAILED DESCRIPTION**

Objects, solutions and advantages of the present disclosure will be more apparent from the detailed description of the present disclosure in conjunction with drawings in the embodiments. The embodiments described below are intended to explain and not to limit the scope of the present disclosure.

Embodiment 1

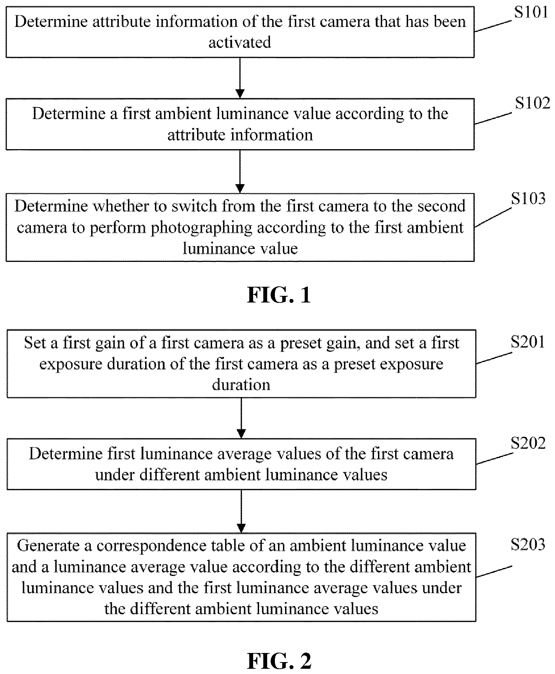

In order to solve the technical problem in the background, embodiments of the present disclosure provide a photographing method based on two cameras. The method is applied to a terminal. The terminal at least includes a first camera, a second camera and an image processor. FIG. 1 is a flowchart of a photographing method based on two cameras according to an embodiment 1 of the present disclosure. As shown in FIG. 1, the method includes steps S101, S102 and S103.

In step S101, the image processor in the terminal determines attribute information of the first camera that has been activated. Optionally, the terminal in the implementation process may be an electronic device at least having two cameras such as a cellphone, a camera, a tablet PC and the link.

Optionally, when a camera application is activated, a default camera is activated, and the camera activated by default is determined as the first camera. The attribute information includes, but is not limited to, a gain, an exposure duration and a luminance average value. In this embodiment and other embodiments of the present disclosure, the luminance average value may be a value obtained by counting Bayer data output by a camera, that is, a luminance average value of the image captured by the camera under the gain and the exposure duration.

In step S102, the image processor determines a first ambient luminance value according to the attribute information. The step S102 includes steps S1021 and S1022.

In step S1021, the image processor determines a first luminance average value corresponding to the first camera under a preset gain and a preset exposure duration according to the attribute information of the first camera.

Optionally, the attribute information of the first camera includes a current gain, a current exposure duration and a second luminance average value of the first camera. The second luminance average value is a luminance average value of the image captured by the first camera under the current gain and the current exposure duration. Accordingly, the step in which the first luminance average value corresponding to the first camera under the preset gain and the preset exposure duration is determined according to the attribute information of the first camera includes following steps.

A ratio of the current gain of the first camera to the preset gain is determined as a first ratio; a ratio of the current exposure duration to the preset exposure duration is determined as a second ratio; and a product of the second luminance average value, the first ratio and the second ratio is determined as the first luminance average value.

In the practical implementation, the first luminance average value corresponding to the first camera under the preset gain and the preset exposure duration may be determined according to a formula (1-1).

$$lum_1 = \frac{lum_2 \times gain\_default \times \exp\_default}{gain\_cur \times \exp\_cur} \qquad (1\text{-}1)$$

In the formula (1-1), $lum_1$ is the first luminance average value, $lum_2$ is the second luminance average value, $gain\_cur$ is the current gain of the first camera, $\exp\_cur$ is the current exposure duration of the first camera, $gain\_default$ is the preset gain, and $\exp\_default$ is the preset exposure duration.

In step S1022, the image processor determines the ambient luminance value corresponding to the first luminance average value as the first ambient luminance value.

Optionally, the ambient luminance value refers to a luminance value of the external environment.

In the practical application, the step S1002 may be implemented through following steps: a preset correspondence table of the ambient luminance value and the luminance average value is inquired according to the first luminance average value, and the ambient luminance value corresponding to the first luminance average value is determined; and the ambient luminance value corresponding to the first luminance average value is determined as the first ambient luminance value.

In step S103, the image processor determines whether to switch from the first camera to the second camera according to the first ambient luminance value. Optionally, the step S103 includes following steps.

If the first ambient luminance value is less than the preset ambient luminance threshold and a pixel of the first camera is higher than a pixel of the second camera, the first camera is switched to the second camera to perform photographing.

If the first ambient luminance value is less than the preset ambient luminance threshold and the pixel of the first camera is lower than or equal to the pixel of the second camera, the first camera is not switched to the second camera to perform photographing.

If the first ambient luminance value is greater than or equal to the preset ambient luminance threshold and the pixel of the first camera is lower than or equal to the pixel of the second camera, the first camera is switched to the second camera to perform photographing.

If the first ambient luminance value is greater than or equal to the preset ambient luminance threshold and the pixel of the first camera is higher than the pixel of the second camera, the first camera is not switched to the second camera to perform photographing.

That is, when the surrounding environment is dark during photographing, the camera with the lower pixel is activated to photograph, and when the surrounding environment is bright, the camera with the higher pixel is activated to photograph, so that the photographing detail is better. Therefore, suitable cameras may be selected automatically according to different ambient luminance, thereby ensuring the good photographing effect.

In the photographing method based on two cameras provided by this embodiment of the present disclosure, attribute information of the first camera that has been activated is first determined; then a first ambient luminance value is determined according to the attribute information; and finally whether to switch from the first camera to the second camera is determined according to the first ambient luminance value. Therefore, the suitable camera may be selected automatically according to the actual luminance of the external environment, thereby ensuring the good photographing effect in various scenarios.

Embodiment 2

Based on the foregoing embodiment, an embodiment of the present disclosure provides a method for generating a correspondence table of the ambient luminance value and the luminance value. The method is applied to a terminal. The terminal at least includes a first camera, a second camera and an image processor. FIG. 2 is a flowchart of a method for generating a correspondence table of the ambient luminance value and the luminance average value according to an embodiment 2 of the present disclosure. As shown in FIG. 2, the method includes steps S201, S202 and S203.

In step S201, the image processor of the terminal sets a current gain of the first camera as a preset gain, and sets a current exposure duration of the first camera as a preset exposure duration.

Optionally, when a camera application of the terminal is activated, the terminal activates the first camera, sets the current gain of the first camera as the preset gain, and sets the current exposure duration of the first camera as the preset exposure duration.

In step S202, the image processor determines first luminance average values of the first camera under different ambient luminance values.

Optionally, the first camera is activated for test under different ambient luminance conditions, and a first luminance average value of the image captured by the first camera under different ambient luminance conditions is determined by using Bayer data output by the first camera.

In step S203, the image processor generates a correspondence table of the ambient luminance value and the luminance average value according to the different ambient luminance values and the first luminance average values under the different ambient luminance values.

Optionally, the first luminance average values of the first camera under the different ambient luminance obtained in the step S202 are in a one-to-one correspondence to generate the correspondence table of the ambient luminance value and the luminance value.

In this embodiment, in order to achieve better effects in different luminance scenarios, the first camera adjusts the exposure duration and the gain according to the current scenario to achieve ideal luminance, and the first luminance average value of data output by the first camera varies depending on the luminance, exposure duration and gain of the scenario. In order to obtain a correspondence between the first luminance average value counted from the data output by the first camera and the actual ambient luminance value of the scenario, the exposure duration and the gain of the first camera are fixed, the first luminance average value counted from the data output by the camera is tested under different ambient luminance values to obtain the first luminance average values of the first camera under different ambient luminance values, and a correspondence table of the ambient luminance value and the luminance value is generated according to the different ambient luminance values and the first luminance average values under different luminance values.

When the current gain and the current exposure duration of the first camera are not the preset gain and the preset exposure duration, the second luminance average value is determined according to the data output by the first camera, the first luminance average value corresponding to the first camera under the preset gain and the preset exposure duration is determined by using a certain calculation method according to the current gain and the current exposure duration of the first camera and the second luminance average value, a current ambient luminance value is determined by inquiring the correspondence table of the ambient luminance value and the luminance value generated in this embodiment, and thus a camera for photographing is determined according to the current ambient luminance value.

Embodiment 3

This embodiment first provides a photographing method based on two cameras. The method is applied to a dual-camera device. A camera 1 with the higher pixel is used for photographing when the light is better, which obtains better photographing details, while a camera 2 with the lower pixel and a larger pixel size may be used for photographing in the dark light. In the photographing method based on two cameras provided by this embodiment, a default camera is first activated to obtain an average luminance of data output by the default camera, and different cameras are activated for photographing according to the average luminance value. Exemplary steps are described below.

In first step, the camera 1 or the camera 2 is set as the default camera.

In second step, in order to achieve better effects in different luminance scenarios, the camera adjusts the exposure duration and the gain according to the current scenario to achieve ideal luminance, and the first luminance average value of data output by the camera varies depending on the luminance, exposure duration and gain of the scenario. In order to obtain a correspondence between the luminance value (a luminance average value) counted from the data output by the camera and the actual luminance of the scenario, the exposure duration and the gain of the camera are fixed, and the luminance value counted from the data output by the camera and the actual luminance are tested in different scenarios to obtain their correspondence. The example process of testing the luminance value counted from the data output by the camera and the actual luminance in different scenarios to obtain their correspondence is as follows. The camera 1 or the camera 2 is set in the preset gain (gain_default) and the preset exposure duration (exp_default), the camera is activated for test under different ambient luminance conditions, and the luminance value is counted by using the data output by the camera. In the practical application, the luminance value may be counted by using an Auto Exposure (AE) algorithm.

The correspondence between the luminance value and the ambient luminance value is obtained through the test data, and as shown in table 1, luma_1 to luma_n are luminance values counted from the data of the camera with Lux as a unit of illumination.

Table 1 Correspondence table of the luminance value and the ambient luminance value determined by the camera data

| NO. | Luminance value from the camera data | Ambient luminance value |
|-----|--------------------------------------|-------------------------|
| 1 | luma_1 | 10 Lux |
| 2 | luma_2 | 100 Lux |
| 3 | luma_3 | 200 Lux |
| ⋮ | ⋮ | ⋮ |
| n | luma_n | 10000 Lux |

In third step, a camera application is activated. The default camera is first activated, and the current gain (gain_cur), the current exposure duration (exp_cur) and the current luminance value (lum_cur) of the default are obtained. The first corresponding luminance value (lum_default) under the preset gain and the preset exposure duration is determined according to a formula (3-1) and a current parameter of the default camera.

$$lum\_default = \frac{lum\_cur \times gain\_default \times \exp\_default}{gain\_cur \times \exp\_cur} \qquad (3\text{-}1)$$

In the formula (3-1), *lum_default* is the first luminance value, *lum_cur* is the current luminance value, *gain_cur* is the current gain, exp_*cur* is the current exposure duration, *gain_default* is the preset gain, and exp_*default* is the preset exposure duration.

The ambient luminance value corresponding to the current parameter may be inquired through table 1.

In fourth step, a camera for photographing is determined according to the current ambient luminance value. If the current ambient luminance value is less than a preset threshold, the camera 1 is closed and the camera 2 is activated, otherwise the camera 1 is directly used.

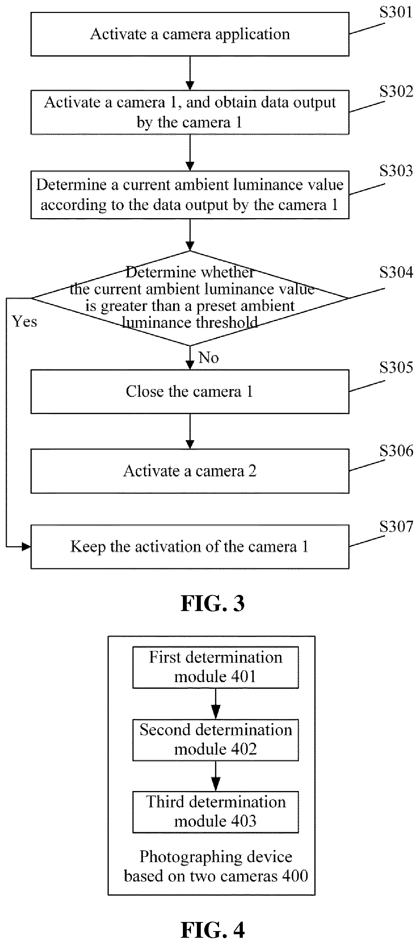

FIG. 3 is a flowchart of a photographing method based on two cameras according to an embodiment 3 of the present disclosure. As shown in FIG. 3, the method includes steps S301 to S307.

In step S301, a camera application is activated.

In step S302, a camera 1 is activated, and data output by the camera 1 is obtained.

Optionally, the camera 1 is a camera with the higher pixel, and the camera 2 is a camera with the lower pixel. The camera 1 is a preset default camera.

In step S303, a current ambient luminance value is determined according to the data output by the camera 1.

Optionally, a current gain, exposure duration and luminance value of the camera 1 are determined according to the data output by the camera 1, a luminance value of the camera 1 under a default gain and a default exposure duration is obtained through the above formula (3-1), and the current ambient luminance value is obtained by inquiring table 1.

In step S304, whether the current ambient luminance value is greater than a preset ambient luminance threshold is determined.

In step S305, if the current ambient luminance value is greater than the preset ambient luminance threshold, the camera 1 is activated. Since the camera 1 is activated at this point, no additional work is required.

In step S306, if the current ambient luminance value is not greater than the preset ambient luminance threshold, the camera 1 is closed.

In step S307, the camera 2 is activated.

In the photographing method based on two cameras provided by this embodiment, a camera application is activated; the preset default camera 1 is activated; a current ambient luminance value is determined according to data output by the camera 1; whether the current ambient luminance value is greater than a preset ambient luminance threshold is determined; and the current ambient luminance value is greater than the preset ambient luminance threshold, the camera 1 continues to be used, otherwise the camera 1 is closed and the camera 2 is activated. Therefore, a suitable camera may be selected automatically according to the actual luminance of the external environment, thereby ensuring the good photographing effect in various scenarios.

Embodiment 4

An embodiment of the present disclosure provides a photographing device based on two cameras. FIG. 4 is a structure diagram of a photographing device based on two cameras according to an embodiment 4 of the present disclosure. As shown in FIG. 4, the photographing device 400 includes a first determination module 401, a second determination module 402 and a third determination module 403.

The first determination module 401 is configured to determine attribute information of the first camera that has been activated.

The second determination module 402 is configured to determine a first ambient luminance value according to the attribute information.

Optionally, the second determination module includes a first determination unit 4012 and a second determination unit 4022.

The first determination unit 4021 is configured to determine a first luminance average value corresponding to the first camera under a preset gain and a preset exposure duration according to the attribute information of the first camera.

Optionally, the attribute information of the first camera includes a current gain, a current exposure duration and a second luminance average value of the first camera, and accordingly, the first determination unit 4021 includes: a first determination subunit, which is configured to determine a ratio of the current gain of the first camera to the preset gain as a first ratio; a second determination subunit, which is configured to determine a ratio of the current exposure duration to the preset exposure duration as a second ratio; and a third determination subunit, which is configured to determine a product of the second luminance average value, the first ratio and the second ratio as the first luminance average value.

The first determination unit 4022 is configured to generate a correspondence table of the ambient luminance value and the luminance average value according to different ambient luminance values and first luminance average values under the different ambient luminance values.

Optionally, the second determination unit 4022 includes: a fourth determination subunit, which is configured to inquire a preset correspondence table of the ambient luminance value and the luminance average value according to the first luminance average value, and determine the ambient luminance value corresponding to the first luminance average value; and a fifth determination unit, which is configured to determine the ambient luminance value corresponding to the first luminance average value as the first ambient luminance value.

The third determination module 403 is configured to determine whether to switch from the first camera to the second camera to perform photographing according to the first ambient luminance value.

Optionally, the third determination module 403 includes a third determination unit 4031, a fourth determination unit 4032, a fifth determination unit 4033 and a sixth determination unit 4034.

The third determination unit 4031 is configured to determine to switch from the first camera to the second camera to perform photographing if the first ambient luminance value is less than the preset ambient luminance threshold and a pixel of the first camera is higher than a pixel of the second camera.

The fourth determination unit 4032 is configured to determine not to switch from the first camera to the second camera to perform photographing if the first ambient luminance value is less than the preset ambient luminance threshold and the pixel of the first camera is lower than or equal to the pixel of the second camera.

The fifth determination unit 4033 is configured to determine to switch from the first camera to the second camera to perform photographing if the first ambient luminance value is greater than or equal to the preset ambient luminance threshold and the pixel of the first camera is lower than or equal to the pixel of the second camera.

The sixth determination unit 4034 is configured to determine not to switch from the first camera to the second camera to perform photographing if the first ambient luminance value is greater than or equal to the preset ambient luminance threshold and the pixel of the first camera is higher than the pixel of the second camera.

The photographing device further includes: a setting module, which is configured to set the current gain of the first camera as the preset gain, and set the current exposure duration of the first camera as the preset exposure duration; a fourth determination module, which is configured to determine first luminance average values of the first camera under different ambient luminance values; and a generation module, which is configured to generate a correspondence table of the ambient luminance value and the luminance value according to the different ambient luminance values and the first luminance average values under different luminance values.

In practical applications, the first determination module 401, the second determination module 402, the third determination module 403, the first determination unit 4012, the second determination unit 4022, the third determination unit 4031, the fourth determination unit 4032, the fifth determination unit 4033 and the sixth determination unit 4034 may be implemented by an image processor, a central processing unit (CPU), a micro control unit (MCU), a digital signal processor (DSP), a field-programmable gate array (FPGA) or the like in the device.

It is to be noted that interaction processes between the various units and modules in this embodiment may refer to interaction processes in the photographing method based on two cameras provided in the embodiment 1, which are not repeated herein. Description of the above embodiment of the photographing device based on two cameras is similar to description of the above method embodiment, and the device embodiment has similar beneficial effects as the method embodiment, which will not be repeated herein. For the technical details not disclosed in the embodiment of the photographing method based on two cameras of the present disclosure, please understand the technical details with reference to the description of the method embodiment of the present disclosure, and for the sake of brevity, what has been described will not be repeated herein.

It should be understood by those skilled in the art that the embodiments of the present disclosure may be provided as methods, systems or computer program products. Therefore, the present disclosure may be implemented by hardware, software, or a combination of hardware and software. In addition, the present disclosure may take the form of a computer program product implemented in one or more computer-usable storage media (including, but not limited to, a disk memory and an optical memory) that includes computer-usable program code.

The present disclosure is described with reference to flowcharts and/or block diagrams of methods, apparatuses (systems) and computer program products according to the embodiments of the present disclosure. It should be understood that each flow and/or block in the flowcharts and/or block diagrams and a combination of flows and/or blocks in the flowcharts and/or block diagrams are implemented by computer program instructions. These computer program instructions can be provided to a general-purpose computer, a special-purpose computer, an embedded processor or a processor of other programmable data processing equipment to produce a machine so that instructions executed by a computer or the processor of other programmable data processing equipment produce a means for implementing functions specified in one or more flows in the flowcharts and/or one or more blocks in the block diagrams.

These computer program instructions can also be stored in a computer-readable memory which can direct the computer or other programmable data processing equipment to operate in a particular manner so that the instructions stored in the computer-readable memory produce a manufactured product including an instruction means. The instruction means implements the functions specified in one or more flows in the flowcharts and/or one or more blocks in the block diagrams.

These computer program instructions can also be loaded onto the computer or other programmable data processing equipment so that a series of operation steps are performed on the computer or other programmable equipment to produce processing implemented by the computer. Therefore, instructions executed on the computer or other programmable equipment provide steps for implementing the functions specified in one or more flows in the flowcharts and/or one or more blocks in the block diagrams.

The above are only preferred embodiments of the present disclosure and are not intended to limit the scope of the present disclosure.

**INDUSTRIAL APPLICABILITY**

The photographing method and device based on two cameras provided by the embodiments of the present disclosure may automatically select a suitable camera according to the actual luminance of the external environment, thereby ensuring the good photographing effect in various scenarios.

**Claims**

1. A photographing method based on two cameras, wherein the two cameras comprise a first camera and a second camera, and the method comprises:

    determining attribute information of the first camera that has been activated;
    determining a first ambient luminance value according to the attribute information; and
    determining whether to switch from the first camera to the second camera to perform photographing according to the first ambient luminance value.

2. The method of claim 1, wherein the determining the first ambient luminance value according to the attribute information comprises:

    determining, according to the attribute information of the first camera, a first luminance average value corresponding to the first camera under a preset gain and a preset exposure duration, wherein the first luminance average value is a luminance average value of an image captured by the first camera under the preset gain and the preset exposure duration; and
    determining an ambient luminance value corresponding to the first luminance average value as the first ambient luminance value.

3. The method of claim 2, wherein the attribute information of the first camera comprises a current gain, a current exposure duration and a second luminance average value of the first camera, and accordingly,
the determining, according to the attribute information of the first camera, the first luminance average value corresponding to the first camera under the preset gain and the preset exposure duration comprises:

    determining a ratio of the current gain of the first camera to the preset gain as a first ratio;
    determining a ratio of the current exposure duration to the preset exposure duration as a second ratio; and
    determining a product of the second luminance average value, the first ratio and the second ratio as the first luminance average value.

4. The method of claim 3, wherein the determining the ambient luminance value corresponding to the first luminance average value as the first ambient luminance value comprises:

    Inquiring, according to the first luminance average value, a preset correspondence table of an ambient luminance value and an luminance average value, and determining the ambient luminance value corresponding to the first luminance average value; and
    determining the ambient luminance value corresponding to the first luminance average value as the first ambient luminance value.

5. The method of claim 4, further comprising:

    setting the current gain of the first camera as the preset gain, and setting the current exposure duration of the first camera as the preset exposure duration;
    determining first luminance average values of the first camera under different ambient luminance values; and
    generating the correspondence table of the ambient luminance value and the luminance average value according to the different ambient luminance values and the first luminance average values under the different ambient luminance values.

6. The method of any one of claims 1 to 5, wherein the determining whether to switch from the first camera to the second camera to perform photographing according to the first ambient luminance value comprises:

on condition that the first ambient luminance value is less than a preset ambient luminance threshold and a pixel of the first camera is higher than a pixel of the second camera, switching from the first camera to the second camera to perform photographing;

on condition that the first ambient luminance value is less than the preset ambient luminance threshold and the pixel of the first camera is lower than or equal to the pixel of the second camera, not switching from the first camera to the second camera to perform photographing;

on condition that the first ambient luminance value is greater than or equal to the preset ambient luminance threshold and the pixel of the first camera is lower than or equal to the pixel of the second camera, switching from the first camera to the second camera to perform photographing; and

on condition that the first ambient luminance value is greater than or equal to the preset ambient luminance threshold and the pixel of the first camera is higher than the pixel of the second camera, not switching from the first camera to the second camera to perform photographing.

7. A photographing device based on two cameras, wherein the two cameras comprise a first camera and a second camera, and the photographing device comprises:

a first determination module, which is configured to determine attribute information of the first camera that has been activated;

a second determination module, which is configured to determine a first ambient luminance value according to the attribute information; and

a third determination module, which is configured to determine whether to switch from the first camera to the second camera to perform photographing according to the first ambient luminance value.

8. The photographing device of claim 7, wherein the second determination module comprises:

a first determination unit, which is configured to determine, according to the attribute information of the first camera, a first luminance average value corresponding to the first camera under a preset gain and a preset exposure duration; and

a second determination unit, which is configured to determine an ambient luminance value corresponding to the first luminance average value as the first ambient luminance value.

9. The photographing device of claim 8, wherein the attribute information of the first camera comprises a current gain, a current exposure duration and a second luminance average value of the first camera, and accordingly, the first determination unit comprises:

a first determination subunit, which is configured to determine a ratio of the current gain of the first camera to the preset gain as a first ratio;

a second determination subunit, which is configured to determine a ratio of the current exposure duration to the preset exposure duration as a second ratio; and

a third determination subunit, which is configured to determine a product of the second luminance average value, the first ratio and the second ratio as the first luminance average value.

10. The photographing device of claim 9, wherein the second determination unit comprises:

a fourth determination subunit, which is configured to inquire, according to the first luminance average value, a preset correspondence table of an ambient luminance value and a luminance average value, and determine the ambient luminance value corresponding to the first luminance average value; and

a fifth determination unit, which is configured to determine the ambient luminance value corresponding to the first luminance average value as the first ambient luminance value.

11. A storage medium, which is configured to store program code for executing the method of any one of claims 1 to 6.

| Determine attribute information of the first camera that has been activated | S101 |

↓

| Determine a first ambient luminance value according to the attribute information | S102 |

↓

| Determine whether to switch from the first camera to the second camera to perform photographing according to the first ambient luminance value | S103 |

**FIG. 1**

| Set a first gain of a first camera as a preset gain, and set a first exposure duration of the first camera as a preset exposure duration | S201 |

↓

| Determine first luminance average values of the first camera under different ambient luminance values | S202 |

↓

| Generate a correspondence table of an ambient luminance value and a luminance average value according to the different ambient luminance values and the first luminance average values under the different ambient luminance values | S203 |

**FIG. 2**

```
                                                    S301
┌─────────────────────────────────────┐
│       Activate a camera application    │
└─────────────────────────────────────┘
                    │
                    ▼                               S302
┌─────────────────────────────────────┐
│   Activate a camera 1, and obtain data output │
│            by the camera 1            │
└─────────────────────────────────────┘
                    │
                    ▼                               S303
┌─────────────────────────────────────┐
│  Determine a current ambient luminance value │
│  according to the data output by the camera 1 │
└─────────────────────────────────────┘
                    │
                    ▼                               S304
              ╱Determine whether╲
         ╱ the current ambient luminance value ╲
Yes ◄────╲   is greater than a preset ambient   ╱
         ╲      luminance threshold            ╱
                    │
                    ▼ No                            S305
┌─────────────────────────────────────┐
│          Close the camera 1           │
└─────────────────────────────────────┘
                    │
                    ▼                               S306
┌─────────────────────────────────────┐
│          Activate a camera 2          │
└─────────────────────────────────────┘
                    │
                    ▼                               S307
┌─────────────────────────────────────┐
│    Keep the activation of the camera 1 │
└─────────────────────────────────────┘
```

**FIG. 3**

```
┌───────────────────────────────────┐
│  ┌─────────────────────────────┐  │
│  │    First determination      │  │
│  │       module 401            │  │
│  └─────────────────────────────┘  │
│               │                   │
│               ▼                   │
│  ┌─────────────────────────────┐  │
│  │   Second determination      │  │
│  │       module 402            │  │
│  └─────────────────────────────┘  │
│               │                   │
│               ▼                   │
│  ┌─────────────────────────────┐  │
│  │   Third determination       │  │
│  │       module 403            │  │
│  └─────────────────────────────┘  │
│                                   │
│     Photographing device          │
│    based on two cameras 400       │
└───────────────────────────────────┘
```

**FIG. 4**

# INTERNATIONAL SEARCH REPORT

| International application No. |
| --- |
| PCT/CN2017/106269 |

**A.  CLASSIFICATION OF SUBJECT MATTER**

H04M 1/725 (2006.01) i; H04N 5/225 (2006.01) i; H04N 5/235 (2006.01) i
According to International Patent Classification (IPC) or to both national classification and IPC

**B.    FIELDS SEARCHED**

Minimum documentation searched (classification system followed by classification symbols)

H04M; H04N

Documentation searched other than minimum documentation to the extent that such documents are included in the fields searched

Electronic data base consulted during the international search (name of data base and, where practicable, search terms used)

CNPAT; CNKI; WPI; EPODOC; IEEE: 中兴, 李晶, 双, 第二, 摄像, 拍摄, 拍照, 照相, 图像, 采集, 获取, 撷取, 拾取, 传感器, 高, 分辨率, 像素数, 亮度, 切换, 选择, 感光面积, double, two, more, dual, twin?, camera?, image, sensor, amount, number, pixel?, brightness, luminance, luminosity, switch+, choos+, chang+

**C.   DOCUMENTS CONSIDERED TO BE RELEVANT**

| Category* | Citation of document, with indication, where appropriate, of the relevant passages | Relevant to claim No. |
| --- | --- | --- |
| X | CN 103856707 A (LENOVO (BEIJING) CO., LTD.), 11 June 2014 (11.06.2014), description, paragraphs 56-63 and 86-90 | 1, 7, 11 |
| A | CN 105812677 A (YULONG COMPUTER TELECOMMUNICATION SCIENTIFIC (SHENZHEN) CO., LTD.), 27 July 2016 (27.07.2016), entire document | 1-11 |
| A | CN 102638646 A (AMBIT MICROSYSTEMS (SHANGHAI) CO., LTD. et al.), 15 August 2012 (15.08.2012), entire document | 1-11 |
| A | CN 103531603 A (SHANGHAI INTEGRATED CIRCUIT RESEARCH & DEVELOPMENT CENTER), 22 January 2014 (22.01.2014), entire document | 1-11 |
| A | EP 2833618 A2 (CONNAUGHT ELECTRONICS LTD.), 04 February 2015 (04.02.2015), entire document | 1-11 |

| ☐ Further documents are listed in the continuation of Box C. | ☒ See patent family annex. |
| --- | --- |

|  |  |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 17 December 2017 | 29 December 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WANG, Xing Telephone No. (86-10) 52871132 |
| --- | --- |

Form PCT/ISA/210 (second sheet) (July 2009)

## INTERNATIONAL SEARCH REPORT
### Information on patent family members

| | International application No. |
|---|---|
| | PCT/CN2017/106269 |

| Patent Documents referred in the Report | Publication Date | Patent Family | Publication Date |
|---|---|---|---|
| CN 103856707 A | 11 June 2014 | None | |
| CN 105812677 A | 27 July 2016 | None | |
| CN 102638646 A | 15 August 2012 | None | |
| CN 103531603 A | 22 January 2014 | None | |
| EP 2833618 A2 | 04 February 2015 | DE 102013012810 A1 | 05 February 2015 |
| | | US 2015035985 A1 | 05 February 2015 |

Form PCT/ISA/210 (patent family annex) (July 2009)